# EUROPÄISCHE PATENTSCHRIFT

(11) **EP 3 409 517 B1**
(45) Veröffentlichungstag und Bekanntmachung des Hinweises auf die Patenterteilung: **13.04.2022**
(21) Anmeldenummer: 18175516.6
(22) Anmeldetag: 01.06.2018
(51) Int. Cl.: B60G 17/015, B60G 21/055, F16H 49/00, H02K 5/16, H02K 5/24, H02K 7/116, H02K 16/00, H02K 5/173, H02K 7/00

(54) **AKTIVES FAHRWERK**
ACTIVE SUSPENSION
SUSPENSION ACTIF

(30) Priorität: 02.06.2017 LU 100272
(43) Veröffentlichungstag der Anmeldung: 05.12.2018
(73) Patentinhaber: Ovalo GmbH, 65555 Limburg (DE)
(72) Erfinder:
(74) Vertreter: Hoffmann, Jürgen

(56) Entgegenhaltungen:
- EP-A1- 2 336 005
- WO-A1-2014/124752
- WO-A1-2017/042055
- DE-A1-102014 118 110
- JP-A- H09 267 617

## Beschreibung

Die Erfindung betrifft außerdem ein Fahrzeug mit wenigstens einem solchen aktiven Fahrwerk.

Aktive Stabilisierungssysteme, insbesondere zur Verbesserung des Wankverhaltens bei Kurvenfahrten und/oder zum Vermeiden oder Reduzieren von Nickbewegungen beim Anfahren oder Bremsen, sind in unterschiedlichsten Ausführungsformen bekannt.

Beispielsweise gibt es Systeme, bei denen zwischen den Stabilisatorstangenhälften eines geteilten Stabilisators ein aktiv geregelter Aktuator angeordnet ist, der je nach Fahrsituation die Stabilisatorstangenhälften gegeneinander verdreht, um einer durch die Zentrifugalkraft bewirkten Seitneigung des Fahrzeuges entgegen zu wirken. Hierbei wird das jeweils kurvenäußere Rad einer Achse mit einer zusätzlichen Kraft in Richtung Fahrbahn beaufschlagt, während das kurveninnere Rad mit einer von der Fahrbahn weg gerichteten Kraft beaufschlagt wird.

Aus DE 10 2005 031 036 A1 ist ein Schwenkmotor zur Wankregelung durch gegeneinander Verdrehen von zwei Kraftfahrzeugstabilisatoren bekannt. Der Schwenkmotor besteht mindestens aus einem Verstellantrieb mit einem Elektromotor, einem Schwenkmotorgetriebe und einem Gehäuse. Der Schwenkmotor ist zwischen den Kraftfahrzeugstabilisatoren, die auch als Hälften eines Gesamtstabilisators angesehen werden können, angeordnet und dazu bestimmt, aufgrund einer geeigneten Ansteuerung, diese Stabilisatorhälften bedarfsgerecht gegeneinander zu verdrehen.

Aus DE 10 2006 040 109 A1 ist ein aktiver, geteilter Kraftfahrzeugstabilisator mit eingebautem Schwenkmotor bekannt. Der Kraftfahrzeugstabilisator dient zur Wankregelung und weist einen Verstellantrieb mit einem Motor, einem Getriebe und mit einem Gehäuse auf. An einem Gehäuseteil ist ein Sensor zur Erfassung des Torsionwinkels des Stabilisatorteils angebracht, dessen Geber am Stabilisatorteil fixiert ist oder umgekehrt.

Aus DE 10 2008 048 950 A1 ist ein druckmittelbetätigbarer Schwenkmotor für ein Fahrzeug bekannt, der in einem geteilten Stabilisator angeordnet ist und mit dem die beiden Stabilisatorhälften zum Ausgleich von Fahrzeugbewegungen zueinander schwenkbar sind. Der Schwenkmotor weist einen in einem Gehäuse axial verschiebbaren Kolben und beidseitig zum Kolben angeordnete Arbeitsräume auf. Durch Druckmittelbeaufschlagung der Arbeitsräume in Verbindung mit einem oder mehreren Koppelelementen ist ein Drehmoment zwischen den Stabilisatorhälften erzeugbar. Zwischen den Arbeitsräumen besteht eine Verbindung, die mittels eines Ventils in Abhängigkeit von dem Fahrzustand des Fahrzeugs schließbar oder freigebbar ist.

Aus DE 10 2009 013 053 A1 ist ein Stabilisator für ein Fahrwerk eines Kraftfahrzeuges mit zumindest zwei Stabilisatorelementen bekannt, welche mittels zumindest eines elektromotorischen Aktuators zur Wankregelung verdrehbar sind und welche jeweils über zumindest eine Koppelstange mit dem Fahrwerk verbunden sind. Der Stabilisator ist mittels zumindest einer hydraulischen Freischalteinrichtung entkoppelbar.

Aus EP 2 011 674 A1 ist eine Stabilisatoranordnung, umfassend einen zweigeteilten Stabilisator, dessen Stabilisatorabschnitte eine rotatorische Relativbewegung zueinander ausführen und bei einer gegensinnigen Verdrehbelastung eine Rückstellkraft ausüben, bekannt. Die Rückstellkraft ist mittels eines Aktuators in Verbindung mit einem Getriebe einstellbar, wobei die Stabilisatoranordnung unabhängig von einer Torsionsfederwirkung der Stabilisatorabschnitte mindestens eine weitere Feder aufweist, die eine Torsionsfederwirkung bewirkt.

Eine ähnliche Vorrichtung ist aus DE 10 2009 006 385 A1 bekannt. Konkret offenbart diese Druckschrift einen Schwenkmotor für einen aktiven Wankstabilisator, der mit seinem Antrieb an eine Stabilisatorhälfte und der statorseitig an eine andere Stabilisatorhälfte eines geteilten Stabilisators angeschlossen werden kann.

Aus DE 10 2008 010 131 A1 ist ein Wankstabilisator für ein Kraftfahrzeug mit einem ersten und einem zweiten Stabilisatorteil, welche jeweils einem Rad einer gemeinsamen Fahrzeugquerachse des Kraftfahrzeugs zuordenbar und/oder zugeordnet sind, bekannt. Der Wankstabilisator weist ein Gehäuse auf, welches für eine kraftfahrzeugfeste Montage ausgebildet ist und in dem die zwei Stabilisatorteile zur Durchführung von gleichsinnigen und gegensinnigen Schwenkbewegungen gelagert sind. Außerdem ist eine Aktuatorvorrichtung vorgesehen, welche einen Elektromotor und ein Übertragungsgetriebe umfasst, wobei der Elektromotor zur Erzeugung eines Drehmoments und das Übertragungsgetriebe zur Weiterführung des Drehmoments an die Stabilisatorteile ausgebildet und/oder angeordnet sind, und wobei der Elektromotor von der Schwenkbewegung der Stabilisatorteile entkoppelt gelagert ist.

Außer dem vorgenannten Typ von Stabilisatorsystemen gibt es auch Systeme mit mehreren Aktuatoren, bei denen jeweils ein Aktuator ausschließlich einer Radaufhängung zugeordnet ist. Bei einem solchen System kann der Höhenstand eines Rades relativ zur Karosserie unabhängig von der Einstellung bei einem anderen Rad, insbesondere unabhängig vom Höhenstand des Rades derselben Fahrzeugachse, eingestellt werden. Ein solches System hat den Vorteil, dass die Räder einer Fahrzeugachse mit gleichgerichteten Kräften und/oder Drehmomenten beaufschlagt werden können, um beispielsweise einer Nickbewegung beim Anfahren und/oder Bremsen entgegenwirken zu können. Ein solches System ist beispielsweise aus DE 10 2010 037 180 A1 und aus DE 10 2010 037 555 A1 bekannt.

WO 2017/042055 A1 offenbart ein Dämpfungssystem eines zweispurigen Fahrzeugs.

Das Dämpfungssystem umfasst einen passiven Stabilisator mit einem in Fahrzeug-Querrichtung verlaufenden Drehstab und sich endseitig an diesen anschließenden und mit den einander gegenüberliegenden Radaufhängungen einer Achse des Fahrzeugs verbundenen Hebelelementen und mit zwei jeweils einem Rad der Radaufhängung zugeordneten und am Fahrzeugaufbau gelagerten Aktuatoren mit jeweils einem Antrieb. Die Aktuatoren sind als Elektromotoren ausgebildet und dazu ausgelegt, durch geeignete Regelung ihres Antriebs und somit auch durch aktive Einleitung von Kräften in das System Vertikal-Schwingungen des jeweiligen Rades oder der sog. ungefederten Masse und/oder Schwingungen des Fahrzeugaufbaus in einem Frequenzbereich zwischen 0 Hertz und zumindest 20 Hertz zu bedämpfen.

Aus EP 2 336 005 A1 ist eine Anordnung von Stelleinheiten zum Lenken und zur Wankstabilisierung eines von einer Radaufhängung getragenen Fahrzeugrads bekannt, wobei die Radaufhängung über untere Lenker an einem mit dem Aufbau des Kraftfahrzeuges verbundenen Achsträger angelenkt ist und der Achsträger seitliche Längsträger und diese verbindende Querträger aufweist. Die Lenkungs-Stelleinheit ist mit auf Radführungselemente wirkende Spurstangen an dem einen Querträger des Achsträgers befestigt. Die Wankstabilisierungs-Stelleinheit ist mit auf Radführungselemente wirkenden, geteilten Querstabilisatoren an dem anderen Querträger des Achsträgers angeordnet und befestigt.

WO 2014/124752 A1 offenbart ein Drehstabsystem für eine Fahrzeugachse, insbesondere Hinterachse, eines zweispurigen Fahrzeugs, mit jeweils einer Fahrzeugseite zugeordneten ersten und zweiten Drehaktuatoren für eine aktive Fahrwerksregelung, von denen jeder Drehaktuator zumindest eine Motor-Getriebe-Einheit aufweist, mit der Drehmomente erzeugbar und über einen Abtriebshebel als Stellkräfte auf ein Radaufhängungselement übertragbar sind. Die Motor-Getriebe-Einheiten der beiden Drehaktuatoren sind in einem gemeinsamen Gehäuse angeordnet, das drehfest an dem Fahrzeugaufbau montiert ist. Das Gehäuse weist zur Aussteifung des Fahrzeugaufbaus zumindest zwei Anbindungsstellen auf, die über einen Lagerabstand voneinander beabstandet sind und über die das Gehäuse bauteilsteif am Fahrzeugaufbau montiert ist.

DE 10 2014 118 110 A1 offenbart eine aktive Stabilisatorvorrichtung mit einem elektrischen Motor, der einen Stator, einen Rotor, ein Motorgehäuse zur Aufnahme des Stators und des Rotors, eine mit dem Rotor drehfest verbundene Abtriebswelle, die durch eine Austrittseite des Motorgehäuses aus dem Motorgehäuse austritt, und wenigstens ein elektrisches Anschlusselement aufweist, das elektrisch leitend mit dem Stator und/oder Rotor verbunden ist. Der Stator trennt einen Innenraum des Motorgehäuses in einen ersten und einen zweiten Abschnitt, wobei der erste Abschnitt durch den Stator und einen die Austrittsseite umfassenden Teil des Motorgehäuses begrenzt ist. Eine elektrische Anschlussleitung ist mit dem elektrischen Anschlusselement elektrisch leitend verbunden, wobei das elektrische Anschlusselement in dem ersten Abschnitt angeordnet ist und die elektrische Anschlussleitung innerhalb des ersten Abschnitts zu dem elektrischen Anschlusselement verläuft.

Es ist die Aufgabe der vorliegenden Erfindung, ein aktives Fahrwerk anzugeben, das, besonders robust und bauraumsparend ausgebildet werden kann.

Die Aufgabe wird durch ein aktives Fahrwerk mit wenigstens zwei mechanisch parallel geschalteten Getrieben, die jeweils als Dreiwellengetriebe ausgebildet sind, wobei wenigstens eines der Getriebe als Spannungswellengetriebe ausgebildet ist oder beide Getriebe jeweils als ein Spannungswellengetriebe ausgebildet sind, und wobei jeweils ein Circularspline des Spannungswellengetriebes drehfest mit einem Gehäuse verbunden ist und wobei jeweils eine erste Welle einen von einem Antriebsmotor angetriebenen Antrieb bildet und wobei jeweils eine zweite Welle einen Abtrieb bildet, an den jeweils ein eigener Torsionsstab angekoppelt ist, der dazu ausgebildet ist, mit jeweils einer Radaufhängung verkoppelt zu werden, und wobei sich die dritten Wellen beide an demselben Abstützbauteil abstützen, das
a. als tragendes Element einer Fahrzeugkarosserie ausgebildet ist oder das dazu ausgebildet und bestimmt ist, an einer Fahrzeugkarosserie befestigt zu werden, und das
b. als Gehäuse ausgebildet ist, das die beiden Getriebe sowie wenigstens einen mit den Antrieben wirktechnisch verbundenen Antriebsmotor einhaust,
gelöst.

Das erfindungsgemäße aktive Fahrwerk hat den besonderen Vorteil, dass es auf Grund der Parallelschaltung der Getriebe im Zusammenwirken mit dem besonderen Abstützbauteil besonders robust und besonders kompakt ausgebildet werden kann. Die Parallelschaltung der Getriebe manifestiert sich dadurch, dass die Abtriebe der Getriebe wirktechnisch miteinander verbunden sind. Dies kann beispielsweise dadurch realisiert sein, dass die Abtriebe der Getriebe jeweils drehfest mit einem gemeinsamen Verbindungstorsionsstab verbunden sind. Alternativ ist es beispielsweise auch möglich, dass die Torsionsstäbe mit einem gemeinsamen Verbindungstorsionsstab verbunden sind. Insbesondere kann vorteilhaft vorgesehen sein, dass das Gehäuse auch den Verbindungstorsionsstab einhaust. Außerdem kann das Gehäuse die beiden Getriebe sowie wenigstens einen mit den Antrieben wirktechnisch verbundenen Antriebsmotor einhausen.

Ein solches aktives Fahrwerk hat neben weiteren Vorteilen, auf die weiter unten eingegangen wird, den ganz besonderen Vorteil, dass über den Verbindungstorsionsstab derart eine Parallelschaltung der Aktuatoren bewirkt ist, dass insgesamt, für den Fall dass die Aktuatoren ein gleichgerichtetes Drehmoment ausüben, ein hohes Gesamtdrehmoment zu Verfügung steht. Ein solches Gesamtdrehmoment ist bei einem aktiven Fahrwerk, das lediglich einen einzigen Aktuator aufweist, nur unter Verwendung eines Aktuators erzielbar, der radial sehr viel mehr Bauraum beansprucht.

Ganz allgemein kann vorteilhaft vorgesehen sein, dass sich das Abstützbauteil, insbesondere in Form eines Gehäuses, karosseriefest abstützt.

Bei einer besonders vorteilhaften Ausführung ist das Gehäuse dazu ausgebildet, die jeweils auf die dritte Welle jedes Getriebes wirkenden Drehmomente, Axialkräfte und Radialkräfte abzustützen und in eine Fahrzeugkarosserie oder ein Bauteil einer Fahrzeugkarosserie, mit dem das Gehäuse verbindbar ist, abzuleiten. Auf diese Weise ist vorteilhaft erreicht, dass außer dem Gehäuse keine weiteren Abstützbauteile, wie beispielsweise zusätzliche Träger, vorhanden sein müssen, um die genannten Drehmomente und Kräfte abzustützen. Vielmehr kann vorteilhaft sogar vorgesehen sein, dass das als Gehäuse ausgebildete Abstützbauteil selbst als tragendes Element einer Fahrzeugkarosserie, insbesondere als Träger oder als Quertraverse, ausgebildet ist. Eine solche Ausführung hat den ganz besonderen Vorteil, dass die übrigen Komponenten der Fahrzeugkarosserie weniger Tragfunktionen übernehmen müssen und somit material- und bauraumsparender ausgebildet sein können.

Insbesondere kann vorteilhaft vorgesehen sein, dass sich wenigstens ein Torsionsstabdrehlager zum rotierbaren Lagern eines der Torsionsstäbe an dem Gehäuse abstützt und/oder dass das Gehäuse wenigstens eine Aufnahme aufweist, in der ein Torsionsstabdrehlager zum rotierbaren Lagern eines der Torsionsstäbe angeordnet ist. Das Torsionsstabdrehlager kann insbesondere als Wälzlager ausgebildet sein.

Analog kann alternativ oder zusätzlich vorteilhaft vorgesehen sein, dass sich wenigstens ein Verbindungstorsionsstabdrehlager zum rotierbaren Lagern des Verbindungstorsionsstabes an dem Gehäuse abstützt und/oder dass das Gehäuse wenigstens eine Aufnahme aufweist, in der ein Verbindungstorsionsstabdrehlager zum rotierbaren Lagern des Verbindungstorsionsstabes angeordnet ist. Auch das Verbindungstorsionsstabdrehlager kann insbesondere als Wälzlager ausgebildet sein.

Bei einer ganz besonders vorteilhaften Ausführung sind zwei Antriebsmotore vorhanden, wobei ein erster Antriebsmotor ein erstes der Getriebe antreibt und ein zweiter Antriebsmotor ein zweites der Getriebe antreibt. Eine solche Ausführung hat den besonderen Vorteil, dass die Antriebsmotore, insbesondere unabhängig voneinander, angesteuert werden können. Beispielsweise ist es bei einem solchen aktiven Fahrwerk vorteilhaft ermöglicht, insbesondere fahrsituationsabhängig, durch entsprechendes Ansteuern der Aktuatoren den linken Torsionsstab und den rechten Torsionsstab gleichzeitig mit unterschiedlichen Drehmomenten zu beaufschlagen, wobei der Verbindungstorsionsstab tordiert wird. Wie weiter unten noch im Detail erörtert ist, können hierbei insbesondere unterschiedlich hohe, gleichgerichtete Drehmomente oder auch unterschiedlich gerichtete Drehmomente auf die Torsionsstäbe ausgeübt werden.

Vorzugsweise weisen der rechte und der linke Torsionsstab jeweils dieselbe Torsionssteifigkeit auf. Insbesondere kann vorteilhaft vorgesehen sein, dass der linke Torsionsstab und der rechte Torsionsstab identisch und/oder spiegelsymmetrisch aufgebaut sind. An jeden Torsionsstab kann sich endseitig jeweils ein Hebel zur Ankopplung an jeweils einen Lenker einer Radaufhängung anschließen.

Bei einer vorteilhaften Ausführung weisen der rechte und der linke Torsionsstab jeweils dieselbe Torsionssteifigkeit auf, wie der Verbindungstorsionsstab. Eine solche Ausführung hat den besonderen Vorteil, dass sich beide Aktuatoren direkt gekoppelt unterstützen können, um beispielsweise einem möglichen Wankwinkel entgegen zu wirken.

Bei einer anderen Ausführung, die insbesondere ein gegensinniges Drehen der Torsionsstäbe um besonders große Winkel erlaubt, weisen der rechte und der linke Torsionsstab jeweils eine größere Torsionssteifigkeit auf, als der Verbindungstorsionsstab. Eine solche Ausführung hat den besonderen Vorteil, dass ein verbesserter Fahrkomfort bei einseitiger Radanregung erzielbar ist.

Zur Klarstellung wird angemerkt, dass mit dem Begriff der Torsionssteifigkeit im Rahmen dieser Anmeldung, soweit nicht explizit etwas anderes ausgeführt ist, die absolute Torsionssteifigkeit des jeweiligen Bauteils gemeint ist, die insbesondere von dem Material, der Geometrie und der Größe des jeweiligen Bauteils abhängt.

Der rechte Torsionsstab, der linke Torsionsstab und der Verbindungstorsionsstab können unabhängig voneinander aus unterschiedlichen Rohmaterialstücken hergestellt sei. Alternativ ist es auch möglich, dass die Torsionsstäbe und der Verbindungstorsionsstab gemeinsam einstückig aus demselben Stück Rohmaterial hergestellt sind.

Erfindungsgemäß ist wenigstens eines der Getriebe als Spannungswellengetriebe ausgebildet. Insbesondere können vorteilhaft beide Getriebe jeweils als Spannungswellengetriebe ausgebildet sein. Die Verwendung von Spannungswellengetrieben hat, insbesondere aufgrund von deren Spielfreiheit, den besonderen Vorteil, dass eine besonders hohe Einstellgenauigkeit und eine hohe Langlebigkeit erzielbar sind.

Bei einer ganz besonders kompakt und robust ausbildbaren Ausführung bildet jeweils der Flexspline des jeweiligen Spannungswellengetriebes den Abtrieb, während der Circularspline erfindungsgemäß über das Gehäuse karosseriefest verankert wird. Als Antrieb dient vorzugsweise der Wellengenerator des jeweiligen Spannungswellengetriebes. Insoweit kann vorteilhaft vorgesehen sein, dass ein erster Flexspline des ersten Spannungswellengetriebes den Abtrieb des ersten Getriebes bildet und/oder dass ein zweiter Flexspline des zweiten Spannungswellengetriebes den Abtrieb des zweiten Getriebes bildet.

Das Gehäuse kann mehrteilig aufgebaut sein. Insbesondere kann das Gehäuse aus mehreren Teilen gebildet sein, die einen gemeinsamen, zusammenhängenden Aufnahmeraum umschließen. In dem Aufnahmeraum sind vorzugsweise die Getriebe und die die Antriebsmotore angeordnet. Außerdem können ein Verbindungstorsionsstab und/oder eine Steuerungsvorrichtung in dem Aufnahmeraum angeordnet sein.

Es ist insbesondere möglich, dass das Gehäuse zwei räumlich separate Aktuatorgehäuse aufweist, die drehfest miteinander verbunden sind.

An dem Gehäuse können weitere Gehäuseelemente, wie Hebelgehäuse, Lagergehäuse oder Elektromotore angebracht sein. Insbesondere können die weiteren Gehäuseelemente drehfest an dem Gehäuse befestigt sein. Insbesondere kann vorteilhaft vorgesehen sein, dass ein erstes Getriebe und ein erster Antriebsmotor einen ersten Aktuator bilden, der ein erstes Aktuatorgehäuse aufweist, und dass ein zweites Getriebe und ein zweiter Antriebsmotor einen zweiten Aktuator bilden, der ein zweites Aktuatorgehäuse aufweist, und dass das erste Aktuatorgehäuse sowie das zweite Aktuatorgehäuse Bestandteile des Gehäuses sind oder gemeinsam das Gehäuse bilden.

Bei einer besonders vorteilhaften Ausführung sind die beiden Aktuatoren zueinander spiegelsymmetrisch aufgebaut und/oder angeordnet. Eine solche Ausführung ermöglicht in besonders vorteilhafter Weise die Verwendung von Gleichteilen und insbesondere von zwei gleichen Aktuatoren.

In dem Gehäuse können zusätzliche Bauteile angeordnet sein. Hierzu gehören beispielsweise eine elektronische Steuerungsvorrichtung zum Ansteuern der Aktuatoren oder Sensoren, die aktuelle Messgrößen des aktiven Fahrwerks und/oder der Getriebe und/oder der Antriebsmotore und/oder der Torsionsstäbe und/oder des Verbindungstorsionsstabes messen.

Wie bereits erwähnt kann das Gehäuse dazu ausgebildet und bestimmt sein, beweglich an einer Fahrzeugkarosserie oder wenigstens einer Komponente einer Fahrzeugkarosserie befestigt zu werden. Hierfür kann das Gehäuse Befestigungselemente, wie Befestigungsfahnen, Befestigungsösen oder Befestigungsbohrungen, aufweisen, durch die Befestigungsschrauben geführt werden können.

Insbesondere kann das Gehäuse dazu ausgebildet und bestimmt sein, unter Zwischenschaltung eines Elements zur akustischen Entkopplung an einer Fahrzeugkarosserie oder wenigstens einer Komponente einer Fahrzeugkarosserie befestigt zu werden. Hierbei kann es sich insbesondere um ein dauerelastisches Bauteil, beispielsweise aus Gummi, handeln, das einerseits an der Fahrzeugkarosserie und andererseits an dem Aktuatorgehäuse befestigt wird. Es ist alternativ oder zusätzlich auch möglich, andersartige Dämpfungselemente, wie beispielsweise Luftdämpfer oder hydraulische Dämpfer zwischen das Aktuatorgehäuse und die Fahrzeugkarosserie zu schalten.

Um Verspannungen des Gehäuses beim Befestigen zu vermeiden, kann vorteilhaft vorgesehen sein, dass das Gehäuse mittels wenigstens eines Loslagers an der Fahrzeugkarosserie oder einer Komponente einer Fahrzeugkarosserie gelagert wird. Insbesondere kann das Gehäuse mittels eines Festlagers und zusätzlich an anderer Stelle mittels eines Loslagers an einer Fahrzeugkarosserie oder einer Komponente einer Fahrzeugkarosserie befestigt sein. Das Loslager ermöglicht vorzugsweise eine Verschiebbarkeit in Axialrichtung.

Vorzugsweise sind die Aktuatoren unabhängig voneinander betreibbar und/oder ansteuerbar. Dies ermöglicht es, die Aktuatoren bei Bedarf derart anzusteuern, dass sie gleichzeitig ein gleichgerichtetes Drehmoment auf die Torsionsstäbe ausüben, beispielsweise um die Karosserie an einer Fahrzeugachse anzuheben oder abzusenken. Dies ermöglicht es außerdem, die Aktuatoren bei Bedarf derart anzusteuern, dass sie gleichzeitig ein gegensinniges Drehmoment auf die Torsionsstäbe ausüben, beispielsweise um ein Neigen der Fahrzeugkarosserie zur Seite zu bewirken. Es ist vorteilhaft auch möglich, die Aktuatoren bei Bedarf derart anzusteuern, dass gleichzeitig sowohl ein Neigen, als auch ein Anheben oder Absenken der Fahrzeugkarosserie an einer Fahrzeugachse erfolgt.

Das aktive Fahrwerk kann eine Steuerungsvorrichtung beinhalten, die die Aktuatoren steuert. Insbesondere kann vorteilhaft vorgesehen sein, dass die Steuerungsvorrichtung dazu ausgebildet ist, Steuerungsvorgaben von Sensoren und/oder von einer übergeordneten Fahrzeugelektronik zu empfangen und die Aktuatoren unter Berücksichtigung der Steuerungsvorgaben zu steuern. Wie bereits erwähnt, kann die Steuerungsvorrichtung vorteilhaft in dem Gehäuse angeordnet sein.

Bei einer besonderen Ausführung ist eine Messvorrichtung vorhanden, die die Torsion des Verbindungstorsionsstabes misst. Aufgrund des ermittelten Messwertes kann rückgeschlossen werden, welchen Drehwinkel die Torsionsstäbe relativ zueinander gerade aufweisen und welche Drehmomente gerade auf die Torsionsstäbe wirken. Insbesondere kann unter Berücksichtigung weiterer an Steuerparameter der Aktuatoren rückgeschlossen werden, welche über die Räder des Fahrzeugs eingetragenen, externe Kräfte und Drehmomente auf die Torsionsstäbe wirken. Insbesondere kann vorgesehen sein, dass die Steuerungsvorrichtung die gemessene Torsion des Verbindungstorsionsstabes, insbesondere neben anderen Parametern oder Steuerungsvorgaben, bei der Ansteuerung der beiden Aktuatoren berücksichtigt.

Wie bereits erwähnt, können die Aktuatoren derart angesteuert werden, dass diese die Torsionsstäbe mit gleichgerichteten Drehmomenten beaufschlagen. Hierdurch kann an beiden Radaufhängungen einer Fahrzeugachse gleichzeitig eine Kraft bewirkt werden, die die Aufbaufedern spannt oder alternativ eine Kraft, die die Aufbaufedern entspannt. Entsprechend kann hierdurch ein Anheben oder ein Absenken der Fahrzeugkarosserie bewirkt werden.

Insbesondere können die Aktuatoren derart angesteuert werden, dass diese in demselben Zeitfenster jeweils eine Drehung des Abtriebselements um denselben Winkel bewirken, oder der Art, dass diese in demselben Zeitfenster jeweils eine gleichsinnige Drehung der Abtriebselemente um unterschiedliche Winkel bewirken.

Wie bereits erwähnt, können die Aktuatoren auch derart angesteuert werden, dass diese die Torsionsstäbe mit gegensinnigen Drehmomenten beaufschlagen. Dies bietet sich insbesondere bei Kurvenfahrten an, um einem Neigen der Fahrzeugkarosserie entgegen zu wirken. Insbesondere hierbei kann vorteilhaft vorgesehen sein, dass die Aktuatoren derart angesteuert werden, dass diese den Verbindungstorsionsstab tordieren und so verspannen.

Es ist insbesondere auch möglich, die Aktuatoren derart anzusteuern, dass sich der mittels der Aktuatoren tordierte und verspannte Verbindungstorsionsstab zusammen mit den Angekoppelten Torsionsstäben insgesamt zusätzlich dreht. Dies beispielsweise um zusätzlich zu einem seitlichen Neigen ein beidseitiges Anheben oder Absenken der Fahrzeugkarosserie zu bewirken.

Wie bereits erwähnt, können die Aktuatoren zum Bewirken einer Nickstabilisierung angesteuert werden. Beispielsweise kann mittels der Aktuatoren bei einem Bremsvorgang auf die Räder einer Vorderachse relativ zu einer Karosserie jeweils eine in Richtung auf die Fahrbahn gerichtete Kraft ausgeübt werden, um ein Absenken den Fahrzeugbugs zu vermeiden. Gleichzeitig kann das Fahrzeugheck über eine entsprechend entgegengerichtete Ansteuerung des aktiven Fahrwerks einer Hinterachse bei einem Bremsvorgang abgesenkt werden. Bei einem Beschleunigungsvorgang kann vorteilhaft eine umgekehrte Ansteuerung der aktiven Fahrwerke von Vorder- und Hinterachse erfolgen.

Wie ebenfalls bereits erwähnt, können die Aktuatoren - alternativ oder zusätzlich - zum Bewirken einer Wankstabilisierung angesteuert werden.

Von besonderem Vorteil ist ein Fahrzeug, das wenigstens ein aktives Fahrwerk beinhaltet.

Insbesondere kann vorteilhaft vorgesehen sein, dass sowohl die Vorderachse eines Fahrzeugs, als auch die Hinterachse eines Fahrzeugs jeweils ein erfindungsgemäßes aktives Fahrwerk aufweist. Hierbei kann darüber hinaus vorteilhaft vorgesehen sein, dass die beiden aktiven Fahrwerke der Vorderachse und der Hinterachse aufeinander abgestimmt und/oder zueinander synchron angesteuert werden. Die Ansteuerung kann vorteilhaft, insbesondere fahrsituationsabhängig, erfolgen. Beispielsweise kann eine fahrsituationsabhängige Ansteuerung erfolgen, um das Fahrverhalten des Fahrzeugs bei Kurvenfahrten, beim Beschleunigen und/oder beim Bremsen zu verbessern.

Die Torsionsstäbe können vorteilhaft zusammen mit dem Verbindungstorsionsstab einen Stabilisator der jeweiligen Fahrzeugachse bilden.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen aktiven Fahrwerks,
- Fig. 2: ein zweites Ausführungsbeispiel eines erfindungsgemäßen aktiven Fahrwerks,
- Fig. 3: ein drittes Ausführungsbeispiel eines erfindungsgemäßen aktiven Fahrwerks,
- Fig. 4: ein viertes Ausführungsbeispiel eines erfindungsgemäßen aktiven Fahrwerks, und
- Fig. 5: ein Ausführungsbeispiel eines Fahrzeugs, das ein erfindungsgemäßes aktives Fahrwerk aufweist.

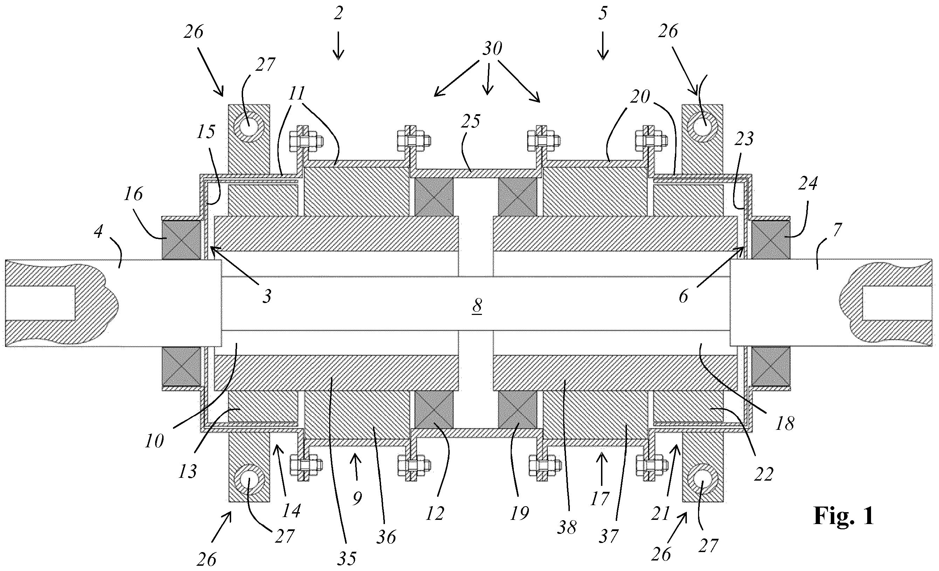

Fig. 1 zeigt ein erstes Ausführungsbeispiel eines erfindungsgemäßen aktiven Fahrwerks 1. Das aktive Fahrwerk 1 weist einen ersten Aktuator 2 auf, an dessen Abtrieb 3 ein linker Torsionsstab 4 drehfest angekoppelt ist. Der linke Torsionsstab 4 ist dazu ausgebildet, mit einer linken Radaufhängung einer Fahrzeugachse verkoppelt zu werden. Das aktive Fahrwerk 1 weist außerdem einen zweiten Aktuator 5 auf, an dessen Abtrieb 6 ein rechter Torsionsstab 7 drehfest angekoppelt ist. Der rechte Torsionsstab 7 ist dazu ausgebildet, mit einer rechten Radaufhängung einer Fahrzeugachse verkoppelt zu werden.

Die Torsionsstäbe 4, 7 sind drehfest mit einem Verbindungstorsionsstab 8 verbunden.

Der erste Aktuator 2 und der zweite Aktuator 5 sind gleich aufgebaut, jedoch spiegelsymmetrisch zueinander angeordnet. Der erste Aktuator 2 beinhaltet einen ersten Antriebsmotor 9, der einen ersten Rotor 35 und einen ersten Stator 36 beinhaltet und der eine erste Hohlwelle 10 zur Rotation antreibt. Die Hohlwelle 10 ist relativ zu einem ersten Aktuatorgehäuse 11 mittels eines Wälzlagers 12 drehbar gelagert. Die erste Hohlwelle 10 ist außerdem drehfest mit dem Wellengenerator 13 eines ersten Spannungswellengetriebes 14 verbunden. Der Flextopf 15 des ersten Spannungswellengetriebes 14 fungiert als Abtrieb und ist drehfest mit dem linken Torsionsstab 4 verbunden. Der linke Torsionsstab 4 ist mittels eines weiteren Wälzlagers 16 relativ zu dem ersten Aktuatorgehäuse 11 drehbar gelagert.

Der zweite Aktuator 5 beinhaltet einen zweiten Antriebsmotor 17, der einen zweiten Rotor 37 und einen zweiten Stator 38 beinhaltet und der eine zweite Hohlwelle 18 zur Rotation antreibt. Die zweite Hohlwelle 18 ist mittels eins Wälzlagers 19 relativ zu einem zweiten Aktuatorgehäuse 20 drehbar gelagert. Der zweite Aktuator 5 beinhaltet ein zweites Spannungswellengetriebe 21, dessen Wellengenerator 22 über die zweite Hohlwelle 18 angetrieben wird. Der Flextopf 23 dient als Abtrieb 6 und ist drehfest mit dem rechten Torsionsstab 7 verbunden. Der rechte Torsionsstab 7 ist außerdem mittels eines weiteren Wälzlagers 24 relativ zu dem zweiten Aktuatorgehäuse 20 drehbar gelagert.

Das erste Aktuatorgehäuse 11 und das zweite Aktuatorgehäuse 20 bilden zusammen mit einem Zwischengehäuseteil 25 ein zusammengesetztes Gehäuse 30 des aktiven Fahrwerks, das beide Antriebsmotore 9, 17 und beide Getriebe 14, 21 einhaust.

Das zusammengesetzte Gehäuse 30 weist Befestigungsfahnen 26 auf, die Durchgangsbohrungen 27 für Befestigungsschrauben beinhalten. Das zusammengesetzte Aktuatorgehäuse kann unter Verwendung der Befestigungsfahnen 26 an einer Fahrzeugkarosserie befestigt werden.

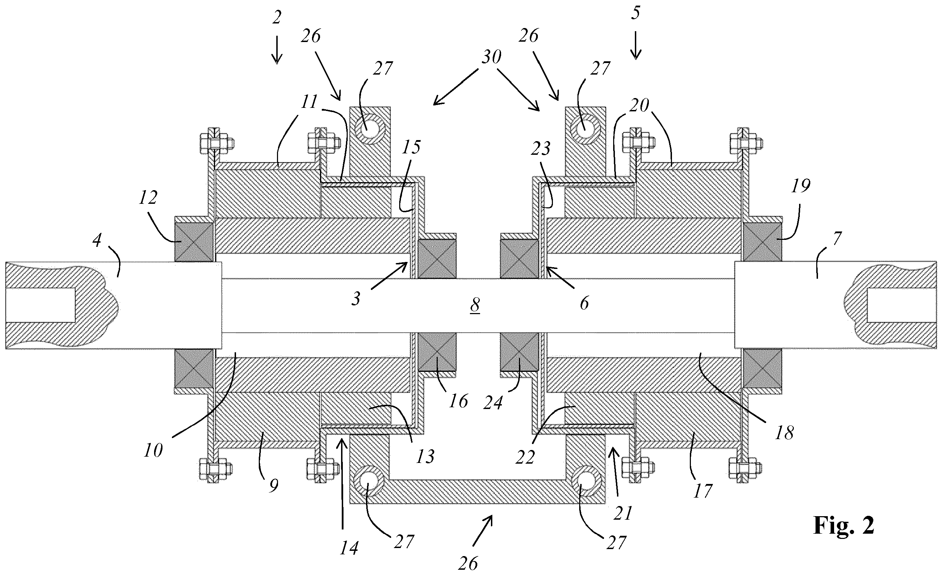

Fig. 2 zeigt ein zweites Ausführungsbeispiel eines erfindungsgemäßen aktiven Fahrwerks 1, das sich von dem in Figur 1 dargestellten Ausführungsbeispiel dadurch unterscheidet, dass die Aktuatoren 2, 5 zwei drehfest miteinander verbundene Aktuatorgehäuse 11, 20 aufweisen, die Bestandteile des Gehäuses 30 sind. Bei diesem Ausführungsbeispiel sind die Aktuatorgehäuse 11, 20 über eine der Befestigungsfahnen 26 drehfest miteinander verbunden.

Außerdem sind die Aktuatoren 2, 5 jeweils um 180 Grad gedreht angeordnet. Die Abtriebe 3, 6 sind bei diesem Ausführungsbeispiel drehfest mit dem Verbindungstorsionsstab 8 verbunden.

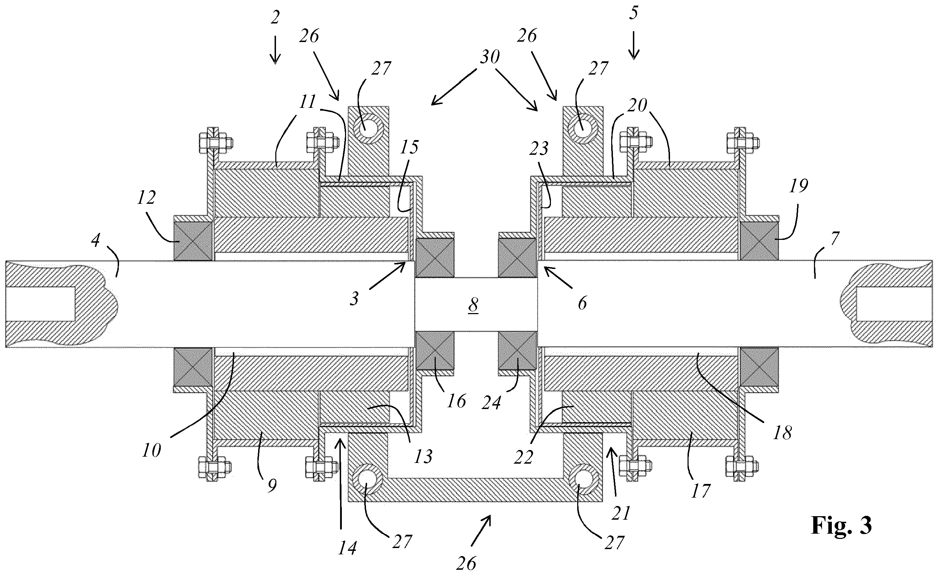

Fig. 3 zeigt ein drittes Ausführungsbeispiel eines erfindungsgemäßen aktiven Fahrwerks 1, das sich von dem in Figur 2 dargestellten Ausführungsbeispiel durch einen kürzeren Verbindungstorsionsstab 8 und dadurch unterscheidet, dass der Abtrieb 3 des ersten Aktuators 2 drehfest mit dem linken Torsionsstab 4 und der Abtrieb 6 des zweiten Aktuators 5 drehfest mit dem rechten Torsionsstab 7 verbunden ist.

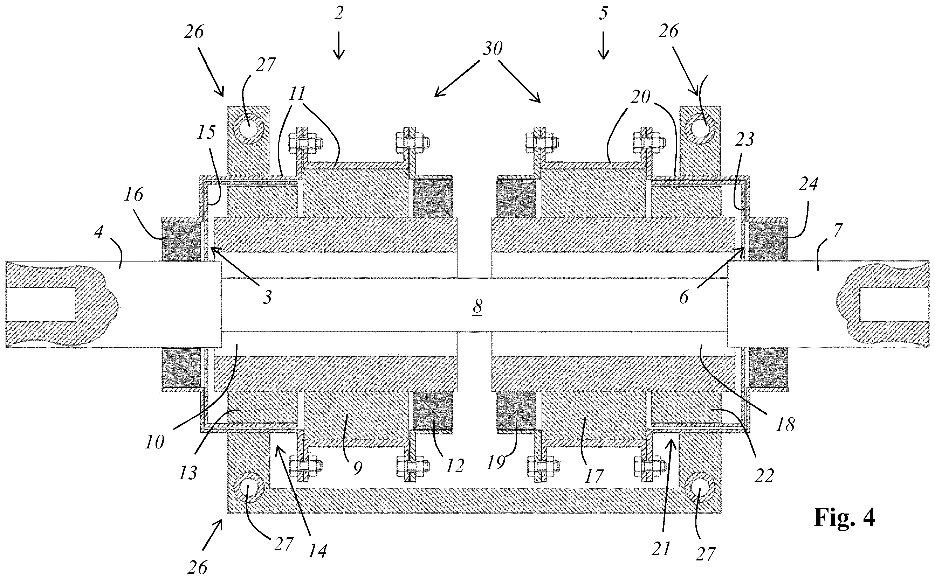

Fig. 4 zeigt ein viertes Ausführungsbeispiel eines erfindungsgemäßen aktiven Fahrwerks 1, das sich von dem in Figur 1 dargestellten Ausführungsbeispiel dadurch unterscheidet, dass die Aktuatoren 2, 5 zwei drehfest miteinander verbundene Aktuatorgehäuse 11, 20 aufweisen, die Bestandteile des Gehäuses 30 sind. Bei diesem Ausführungsbeispiel sind die Aktuatorgehäuse 11, 20 über eine der Befestigungsfahnen 26 drehfest miteinander verbunden.

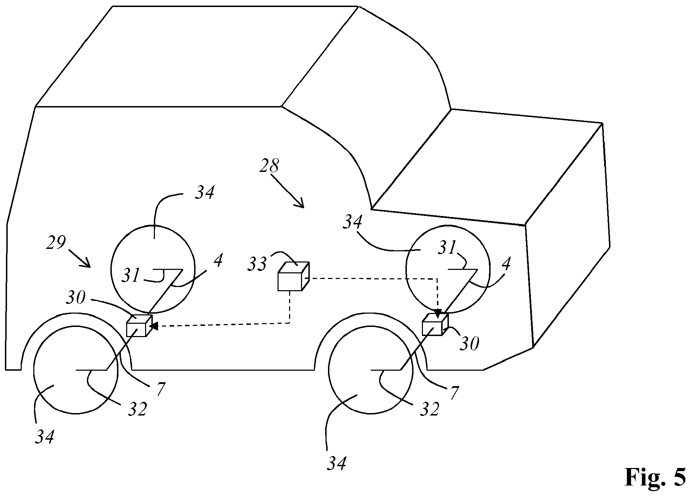

Fig. 5 zeigt ein Ausführungsbeispiel eines Fahrzeugs, das ein erfindungsgemäßes vorderes aktives Fahrwerk 28 und ein erfindungsgemäßes hinteres aktives Fahrwerk 29 aufweist.

Das vordere aktive Fahrwerk 28 weist ein Gehäuse 30 auf und beinhaltet einen ersten Aktuator (in dieser Figur nicht eingezeichnet) und einen zweiten Aktuator (in dieser Figur nicht eingezeichnet).

An den Abtrieb des ersten Aktuators, ist ein linker Torsionsstab 4 angekoppelt. Am Ende des linken Torsionsstabs 4 ist ein Hebel 31 angeordnet. Der Hebel 31 ist an einen (in dieser Figur nicht dargestellten) Lenker der linken vorderen Radaufhängung angekoppelt. An den Abtrieb des zweiten Aktuators, ist ein rechter Torsionsstab 7 angekoppelt. Am Ende des rechten Torsionsstabs 4 ist ein Hebel 32 angeordnet. Der Hebel 32 ist an einen (in dieser Figur nicht dargestellten) Lenker der rechten vorderen Radaufhängung angekoppelt. Die die Torsionsstäbe 4, 7 sind drehfest mit einem Verbindungstorsionsstab 8 verbunden.

Das Gehäuse 30 beinhaltet eine Steuerungsvorrichtung, die Steuerungsvorgaben von einer übergeordneten Fahrzeugelektronik 33 empfängt und die die Aktuatoren unter Berücksichtigung der Steuerungsvorgaben, insbesondere fahrsituationsabhängig, steuert.

Das hintere aktive Fahrwerk 29 ist genauso aufgebaut, wie das vordere aktive Fahrwerk 28. Auch das Gehäuse 30 des hinteren aktiven Fahrwerks 29 beinhaltet eine Steuerungsvorrichtung, die Steuerungsvorgaben von der übergeordneten Fahrzeugelektronik 33 empfängt und die die Aktuatoren des hinteren aktiven Fahrwerks 29 unter Berücksichtigung der Steuerungsvorgaben steuert.

Die Radaufhängungen der Vorder- und der Hinterachse beinhalten eigene (nicht dargestellte) Federn, über die das Gewicht der Karosserie abgestützt ist.

Durch Rotieren der Torsionsstäbe 4, 7 mittels der Aktuatoren kann eine zusätzliche, sich an der Fahrzeugkarosserie abstützende Kraft auf das jeweilige Rad 34 ausgeübt werden und so der Höhenstand der Fahrzeugkarosserie relativ zu dem jeweiligen Rad 34 verändert werden.

### Bezugszeichenliste:

- 1: aktives Fahrwerk
- 2: erster Aktuator
- 3: Abtrieb des ersten Aktuators 2
- 4: linker Torsionsstab
- 5: zweiter Aktuator
- 6: Abtrieb des zweiten Aktuators 5
- 7: rechter Torsionsstab
- 8: Verbindungstorsionsstab
- 9: erster Antriebsmotor
- 10: erste Hohlwelle
- 11: erstes Aktuatorgehäuse
- 12: Wälzlager
- 13: Wellengenerator
- 14: erstes Spannungswellengetriebe
- 15: Flextopf des ersten Spannungswellengetriebes 14
- 16: weiteres Wälzlager
- 17: zweiter Antriebsmotor
- 18: zweite Hohlwelle
- 19: Wälzlager
- 20: zweites Aktuatorgehäuse
- 21: zweites Spannungswellengetriebe
- 22: Wellengenerator
- 23: Flextopf des zweiten Spannungswellengetriebes 22
- 24: weiteres Wälzlager
- 25: Zwischengehäuseteil
- 26: Befestigungsfahnen
- 27: Durchgangsbohrungen
- 28: vorderes aktives Fahrwerk
- 29: hinteres aktives Fahrwerk
- 30: Gehäuse
- 31: Hebel
- 32: Hebel
- 33: übergeordnete Fahrzeugelektronik
- 34: Rad
- 35: Erster Rotor
- 36: Erster Stator
- 37: zweiter Rotor
- 38: zweiter Stator

## Patentansprüche

1. Aktives Fahrwerk (1) mit wenigstens zwei mechanisch parallel geschalteten Getrieben, die jeweils als Dreiwellengetriebe ausgebildet sind, wobei wenigstens eines der Getriebe als Spannungswellengetriebe (14, 21) ausgebildet ist oder beide Getriebe jeweils als ein Spannungswellengetriebe (14, 21) ausgebildet sind, und wobei jeweils ein Circularspline des Spannungswellengetriebes (14, 21) drehfest mit einem Gehäuse (30) verbunden ist und wobei jeweils eine erste Welle (13, 22) einen von einem Antriebsmotor (9, 17) angetriebenen Antrieb bildet und wobei jeweils eine zweite Welle (15, 23) einen Abtrieb bildet, an den jeweils ein eigener Torsionsstab (4, 7) angekoppelt ist, der dazu ausgebildet ist, mit jeweils einer Radaufhängung verkoppelt zu werden, und wobei sich die dritten Wellen beide an demselben Abstützbauteil (11,20) abstützen, das
a. als tragendes Element einer Fahrzeugkarosserie ausgebildet ist oder das dazu ausgebildet und bestimmt ist, an einer Fahrzeugkarosserie befestigt zu werden, und das
b. als Gehäuse (30) ausgebildet ist, das die beiden Getriebe sowie wenigstens einen mit den Antrieben wirktechnisch verbundenen Antriebsmotor (9, 17) einhaust.

2. Aktives Fahrwerk (1) nach Anspruch 1, **dadurch gekennzeichnet**, das
a. die Abtriebe oder die Torsionsstäbe (4, 7) drehfest mit einem Verbindungstorsionsstab (8) verbunden sind, oder dass
b. die Abtriebe oder die Torsionsstäbe (4, 7) drehfest mit einem Verbindungstorsionsstab (8) verbunden sind, der ebenfalls von dem Gehäuse eingehaust ist.

3. Aktives Fahrwerk (1) nach Anspruch 1 oder 2, **dadurch gekennzeichnet, dass**
a. das Gehäuse (30) dazu ausgebildet ist, die auf die dritte Welle wirkenden Drehmomente, Axialkräfte und Radialkräfte abzustützen und in eine Fahrzeugkarosserie oder ein Bauteil einer Fahrzeugkarosserie abzuleiten, und/oder dass
b. sich wenigstens ein Abtriebsdrehlager zum rotierbaren Lagern einer der zweiten Wellen an dem Gehäuse (11) abstützt und/oder dass das Gehäuse (30) wenigstens eine Aufnahme aufweist, in der ein Abtriebsdrehlager zum rotierbaren Lagern einer der zweiten Wellen angeordnet ist, und/oder dass
c. sich wenigstens ein Torsionsstabdrehlager zum rotierbaren Lagern eines der Torsionsstäbe an dem Gehäuse (30) abstützt und/oder dass das Gehäuse (30) wenigstens eine Aufnahme aufweist, in der ein Torsionsstabdrehlager zum rotierbaren Lagern eines der Torsionsstäbe angeordnet ist. und/oder dass
d. sich wenigstens ein Verbindungstorsionsstabdrehlager zum rotierbaren Lagern des Verbindungstorsionsstabes (8) an dem Gehäuse (30) abstützt und/oder dass das Gehäuse (30) wenigstens eine Aufnahme aufweist, in der ein Verbindungstorsionsstabdrehlager zum rotierbaren Lagern des Verbindungstorsionsstabes (8) angeordnet ist.

4. Aktives Fahrwerk (1) nach einem der Ansprüche 1 bis 3, **dadurch gekennzeichnet, dass**
a. die Torsionsstäbe (4, 7) jeweils dieselbe Torsionssteifigkeit aufweisen, wie der Verbindungstorsionsstab (8) oder dass
b. die Torsionsstäbe (4, 7) jeweils eine größere Torsionssteifigkeit aufweisen, als der Verbindungstorsionsstab.

5. Aktives Fahrwerk (1) nach einem der Ansprüche 2 bis 4, **dadurch gekennzeichnet, dass** die Torsionsstäbe (4, 7) und der Verbindungstorsionsstab (8) unabhängig voneinander aus unterschiedlichen Rohmaterialstücken hergestellt sind.

6. Aktives Fahrwerk (1) nach einem der Ansprüche 1 bis 5, **dadurch gekennzeichnet, dass**
a. zwei Antriebsmotore (9, 17) vorhanden sind, wobei ein erster Antriebsmotor (9) ein erstes der Getriebe antreibt und ein zweiter Antriebsmotor (17) ein zweites der Getriebe antreibt, und/oder dass
b. jeweils ein Flexspline des Spannungswellengetriebes (14, 21) den Abtrieb bildet.

7. Aktives Fahrwerk (1) nach einem der Ansprüche 1 bis 6, **dadurch gekennzeichnet, dass**
a. das Gehäuse (30) mehrteilig aufgebaut ist, und/oder dass
b. das Gehäuse (30) zwei räumlich separate Aktuatorgehäuse (11, 20) aufweist, die drehfest miteinander verbunden sind, und/oder dass
c. ein erstes Getriebe und ein erster Antriebsmotor (9) einen ersten Aktuator bilden, der ein erstes Aktuatorgehäuse (11) aufweist, und dass ein zweites Getriebe und ein zweiter Antriebsmotor (17) einen zweiten Aktuator bilden, der ein zweites Aktuatorgehäuse (20) aufweist, und dass das erste Aktuatorgehäuse (11) sowie das zweite Aktuatorgehäuse (20) Bestandteile des Gehäuses (30) sind oder gemeinsam das Gehäuse (30) bilden.

8. Aktives Fahrwerk (1) nach einem der Ansprüche 1 bis 7, **dadurch gekennzeichnet, dass**
a. das Gehäuse (30) dazu ausgebildet und bestimmt ist, beweglich an einer Fahrzeugkarosserie oder wenigstens einer Komponente einer Fahrzeugkarosserie befestigt zu werden, und/oder dass
b. das Gehäuse (30) dazu ausgebildet und bestimmt ist, unter Zwischenschaltung eines Elements zur akustischen Entkopplung an einer Fahrzeugkarosserie oder wenigstens einer Komponente einer Fahrzeugkarosserie befestigt zu werden.

9. Aktives Fahrwerk (1) nach einem der Ansprüche 4 bis 8, **dadurch gekennzeichnet, dass**
a. die Aktuatoren (2, 5) unabhängig voneinander betreibbar und/oder ansteuerbar sind, und/oder dass
b. eine Steuerungsvorrichtung vorhanden ist, die die Aktuatoren (2, 5) steuert, und/oder dass
c. eine Steuerungsvorrichtung vorhanden ist, die dazu ausgebildet ist, Steuerungsvorgaben von Sensoren und/oder von einer übergeordneten Fahrzeugeinheit zu empfangen und die die Aktuatoren (2, 5) unter Berücksichtigung der Steuerungsvorgaben zu steuern, und/oder dass
d. eine Steuerungsvorrichtung vorhanden ist, die die Aktuatoren (2, 5) steuert und die in dem Gehäuse (30) angeordnet ist.

10. Aktives Fahrwerk (1) nach einem der Ansprüche 4 bis 9, **dadurch gekennzeichnet, dass**
a. die Aktuatoren (2, 5), insbesondere fahrsituationsabhängig, derart ansteuerbar sind, dass diese die Torsionsstäbe (4, 7) mit gleichgerichteten Drehmomenten beaufschlagen, und/oder dass
b. die Aktuatoren (2, 5), insbesondere fahrsituationsabhängig, derart ansteuerbar sind, dass diese in demselben Zeitfenster jeweils eine Drehung des Abtriebselements um denselben Winkel bewirken, und/oder dass
c. die Aktuatoren (2, 5), insbesondere fahrsituationsabhängig, derart ansteuerbar sind, dass diese in demselben Zeitfenster jeweils eine gleichsinnige Drehung der Abtriebselemente um unterschiedliche Winkel bewirken, und/oder dass
d. die Aktuatoren (2, 5), insbesondere fahrsituationsabhängig, derart ansteuerbar sind, dass diese die Torsionsstäbe (4, 7) mit gegensinnigen Drehmomenten beaufschlagen, und/oder dass
e. die Aktuatoren (2, 5), insbesondere fahrsituationsabhängig, derart ansteuerbar sind, dass diese den Verbindungstorsionsstab (8) tordieren und so verspannen, und/oder dass
f. die Aktuatoren (2, 5), insbesondere fahrsituationsabhängig, derart ansteuerbar sind, dass diese den Verbindungstorsionsstab (8) tordieren und so verspannen und den verspannten Verbindungstorsionsstab (8) zu drehen.

11. Aktives Fahrwerk (1) nach einem der Ansprüche 4 bis 10, **dadurch gekennzeichnet, dass** der erste Aktuator (2) und der zweite Aktuator (5) zueinander spiegelsymmetrisch aufgebaut und/oder angeordnet sind.

12. Aktives Fahrwerk (1) nach einem der Ansprüche 2 bis 11, **gekennzeichnet durch** eine Messvorrichtung, die Torsion des Verbindungstorsionsstabes (8) misst.

13. Aktives Fahrwerk (1) nach Anspruch 12, **dadurch gekennzeichnet, dass** die Steuerungsvorrichtung eine gemessene Torsion des Verbindungstorsionsstabes (8) bei der Ansteuerung der beiden Aktuatoren (2, 5) berücksichtigt.

14. Aktives Fahrwerk (1) nach einem der Ansprüche 9 bis 13, **dadurch gekennzeichnet, dass**
a. die Steuerungsvorrichtung die Aktuatoren (2, 5) zum Bewirken einer Nickstabilisierung ansteuert, und/oder dass
b. die Steuerungsvorrichtung die Aktuatoren (2, 5) zum Bewirken einer Wankstabilisierung ansteuert.

15. Fahrzeug beinhaltend wenigstens ein aktives Fahrwerk (1) nach einem der Ansprüche 1 bis 14.

## Claims

1. Active chassis (1) having at least two gear mechanisms connected mechanically in parallel, each of which is configured as a three-shaft gear mechanism, wherein at least one of the gear mechanisms is configured as a strain wave gearing (14, 21) or both gear mechanisms are configured as strain wave gearing (14, 21), and wherein a respective circular spline of the strain wave gearing (14, 21) is connected rotationally fixedly to a housing (30) and wherein a respective first shaft (13, 22) forms a drive that is driven by a drive motor (9, 17) and wherein a respective second shaft (15, 23) forms an output to which there is connected a respective dedicated torsion bar (4, 7) that is configured to be coupled to a respective wheel suspension, and wherein the third shafts are both supported on the same supporting component (11, 20), which
a. is configured as a load-bearing element of a vehicle body or is configured and intended to be fastened to a vehicle body, and which
b. is configured as a housing (30) that houses the two gear mechanisms and at least one drive motor (9, 17) that is operatively connected to the drives.

2. Active chassis (1) according to Claim 1, **characterized in that**
a. the outputs or the torsion bars (4, 7) are connected rotationally conjointly to a connecting torsion bar (8), or **in that**
b. the outputs or the torsion bars (4, 7) are connected rotationally conjointly to a connecting torsion bar (8) that is likewise housed by the housing.

3. Active chassis (1) according to Claim 1 or 2, **characterized in that**
a. the housing (30) is configured to support torques, axial forces and radial forces acting on the third shaft and to dissipate these into a vehicle body or a component of a vehicle body, and/or **in that**
b. at least one output rotary bearing for the rotatable mounting of one of the second shafts is supported on the housing (11), and/or **in that** the housing (30) has at least one receptacle in which an output rotary bearing for the rotatable mounting of one of the second shafts is arranged, and/or **in that**
c. at least one torsion bar rotary bearing for the rotatable mounting of one of the torsion bars is supported on the housing (30), and/or in that the housing (30) has at least one receptacle in which a torsion bar rotary bearing for the rotatable mounting of one of the torsion bars is arranged, and/or **in that**
d. at least one connecting torsion bar rotary bearing for the rotatable mounting of the connecting torsion bar (8) is supported on the housing (30), and/or **in that** the housing (30) has at least one receptacle in which a connecting torsion bar rotary bearing for the rotatable mounting of the connecting torsion bar (8) is arranged.

4. Active chassis (1) according to any one of Claims 1 to 3, **characterized in that**
a. the torsion bars (4, 7) each have the same torsional stiffness as the connecting torsion bar (8), or **in that**
b. the torsion bars (4, 7) each have a greater torsional stiffness than the connecting torsion bar.

5. Active chassis (1) according to any one of Claims 2 to 4, **characterized in that** the torsion bars (4, 7) and the connecting torsion bar (8) are produced independently of one another from different raw material pieces.

6. Active chassis (1) according to any one of Claims 1 to 5, **characterized in that**
a. two drive motors (9, 17) are provided, wherein a first drive motor (9) drives a first of the gear mechanisms and a second drive motor (17) drives a second of the gear mechanisms, and/or **in that**
b. in each case one flex spline of the strain wave gearing (14, 21) forms the output.

7. Active chassis (1) according to any one of Claims 1 to 6, **characterized in that**
a. the housing (30) is of multi-part construction, and/or **in that**
b. the housing (30) has two spatially separate actuator housings (11, 20) that are connected rotationally fixedly to one another, and/or in that
c. a first gear mechanism and a first drive motor (9) form a first actuator, which has a first actuator housing (11), and **in that** a second gear mechanism and a second drive motor (17) form a second actuator, which has a second actuator housing (20), and **in that** the first actuator housing (11) and the second actuator housing (20) form constituent parts of the housing (30) or jointly form the housing (30).

8. Active chassis (1) according to any one of Claims 1 to 7, **characterized in that**
a. the housing (30) is configured and intended to be fastened movably to a vehicle body or to at least one component of a vehicle body, and/or **in that**
b. the housing (30) is configured and intended to be fastened with the interposition of an element for acoustic decoupling to a vehicle body or to at least one component of a vehicle body.

9. Active chassis (1) according to any one of Claims 4 to 8, **characterized in that**
a. the actuators (2, 5) are operable and/or controllable independently of one another, and/or **in that**
b. a control device is provided which controls the actuators (2, 5), and/or **in that**
c. a control device is provided which is configured to receive control specifications from sensors and/or from a superordinate vehicle unit and to control the actuators (2, 5) taking into consideration the control specifications, and/or **in that**
d. a control device is provided which controls the actuators (2, 5) and which is arranged in the housing (30).

10. Active chassis (1) according to any one of Claims 4 to 9, **characterized in that**
a. the actuators (2, 5) are controllable, in particular in a manner dependent on the driving situation, so as to apply torques in the same direction to the torsion bars (4, 7), and/or **in that**
b. the actuators (2, 5) are controllable, in particular in a manner dependent on the driving situation, so as to each effect a rotation of the output element by the same angle in the same time window, and/or **in that**
c. the actuators (2, 5) are controllable, in particular in a manner dependent on the driving situation, so as to each effect a rotation of the output elements in the same direction by different angles in the same time window, and/or **in that**
d. the actuators (2, 5) are controllable, in particular in a manner dependent on the driving situation, so as to apply torques in the same direction to the torsion bars (4, 7), and/or **in that**
e. the actuators (2, 5) are controllable, in particular in a manner dependent on the driving situation, so as to twist and thus brace the connecting torsion bar (8), and/or in that
f. the actuators (2, 5) are controllable, in particular in a manner dependent on the driving situation, so as to twist and thus brace the connecting torsion bar (8) and rotate the braced connecting torsion bar (8).

11. Active chassis (1) according to any one of Claims 4 to 10, **characterized in that** the first actuator (2) and the second actuator (5) are of mirror-symmetrical construction and/or arrangement with respect to one another.

12. Active chassis (1) according to any one of Claims 2 to 11, **characterized by** a measuring device that measures the torsion of the connecting torsion bar (8) .

13. Active chassis (1) according to Claim 12, **characterized in that** the control device takes a measured torsion of the connecting torsion bar (8) into consideration in the control of the two actuators (2, 5).

14. Active chassis (1) according to any one of Claims 9 to 13, **characterized in that**
a. the control device controls the actuators (2, 5) in order to effect pitch stabilization, and/or **in that**
b. the control device controls the actuators (2, 5) in order to effect roll stabilization.

15. Vehicle comprising at least one active chassis (1) according to any one of Claims 1 to 14.

## Revendications

1. Châssis actif (1) comprenant au moins deux engrenages montés mécaniquement en parallèle, qui sont configurés chacun sous forme d'engrenage à trois arbres, au moins l'un des engrenages étant configuré sous forme d'engrenage à onde de déformation (14, 21) ou les deux engrenages étant configurés chacun sous la forme d'un engrenage à onde de déformation (14, 21), et un Circular Spline de l'engrenage à onde de déformation (14, 21) étant respectivement relié de manière immobile en rotation à un boîtier (30), et un premier arbre (13, 22) formant respectivement un entraînement entraîné par un moteur d'entraînement (9, 17) et un deuxième arbre (15, 23) formant respectivement une sortie, à laquelle est couplée respectivement une barre de torsion propre (4, 7), qui est configurée pour être couplée respectivement à une suspension de roue, et les troisièmes arbres s'appuyant tous deux sur le même composant de support (11, 20), qui
a. est configuré sous forme d'élément porteur d'une carrosserie de véhicule ou qui est configuré pour et destiné à être fixé à une carrosserie de véhicule, et qui
b. est configuré sous forme de boîtier (30), qui loge les deux engrenages ainsi qu'au moins un moteur d'entraînement (9, 17) relié fonctionnellement aux entraînements.

2. Châssis actif (1) selon la revendication 1, **caractérisé en ce que**
a. les sorties ou les barres de torsion (4, 7) sont reliées de manière immobile en rotation à une barre de torsion de liaison (8), ou **en ce que**
b. les sorties ou les barres de torsion (4, 7) sont reliées de manière immobile en rotation à une barre de torsion de liaison (8), qui est également logée dans le boîtier.

3. Châssis actif (1) selon la revendication 1 ou 2, **caractérisé en ce que**
a. le boîtier (30) est configuré pour soutenir les couples de rotation, les forces axiales et les forces radiales agissant sur le troisième arbre et pour les dériver dans une carrosserie de véhicule ou dans un composant d'une carrosserie de véhicule, et/ou **en ce que**
b. au moins un palier rotatif de sortie pour le montage rotatif de l'un des deuxièmes arbres s'appuie sur le boîtier (11) et/ou **en ce que** le boîtier (30) présente au moins un logement dans lequel est agencé un palier rotatif de sortie pour le montage rotatif de l'un des deuxièmes arbres, et/ou **en ce que**
c. au moins un palier rotatif de barre de torsion pour le montage rotatif de l'une des barres de torsion s'appuie sur le boîtier (30) et/ou **en ce que** le boîtier (30) présente au moins un logement dans lequel est agencé un palier rotatif de barre de torsion pour le montage rotatif de l'une des barres de torsion, et/ou **en ce que**
d. au moins un palier rotatif de barre de torsion de liaison pour le montage rotatif de la barre de torsion de liaison (8) s'appuie sur le boîtier (30) et/ou **en ce que** le boîtier (30) présente au moins un logement dans lequel est agencé un palier rotatif de barre de torsion de liaison pour le montage rotatif de la barre de torsion de liaison (8).

4. Châssis actif (1) selon l'une quelconque des revendications 1 à 3, **caractérisé en ce que**
a. les barres de torsion (4, 7) présentent chacune la même rigidité en torsion que la barre de torsion de liaison (8) ou **en ce que**
b. les barres de torsion (4, 7) présentent chacune une rigidité en torsion supérieure à celle de la barre de torsion de liaison.

5. Châssis actif (1) selon l'une quelconque des revendications 2 à 4, **caractérisé en ce que** les barres de torsion (4, 7) et la barre de torsion de liaison (8) sont fabriquées indépendamment les unes des autres à partir de pièces de matériaux bruts différentes.

6. Châssis actif (1) selon l'une quelconque des revendications 1 à 5, **caractérisé en ce que** a. deux moteurs d'entraînement (9, 17) sont présents, un premier moteur d'entraînement (9) entraînant un premier des engrenages et un deuxième moteur d'entraînement (17) entraînant un deuxième des engrenages, et/ou **en ce que**
b. un Flexspline de l'engrenage à onde de déformation (14, 21) forme respectivement la sortie.

7. Châssis actif (1) selon l'une quelconque des revendications 1 à 6, **caractérisé en ce que** a. le boîtier (30) est construit en plusieurs parties, et/ou **en ce que**
b. le boîtier (30) présente deux boîtiers d'actionneur (11, 20) séparés dans l'espace, qui sont reliés entre eux de manière immobile en rotation, et/ou **en ce que**
c. un premier engrenage et un premier moteur d'entraînement (9) forment un premier actionneur qui présente un premier boîtier d'actionneur (11), et **en ce qu'**un deuxième engrenage et un deuxième moteur d'entraînement (17) forment un deuxième actionneur qui présente un deuxième boîtier d'actionneur (20), et **en ce que** le premier boîtier d'actionneur (11) ainsi que le deuxième boîtier d'actionneur (20) sont des constituants du boîtier (30) ou forment ensemble le boîtier (30).

8. Châssis actif (1) selon l'une quelconque des revendications 1 à 7, **caractérisé en ce que**
a. le boîtier (30) est configuré pour et destiné à être fixé de manière mobile sur une carrosserie de véhicule ou sur au moins un composant d'une carrosserie de véhicule, et/ou **en ce que**
b. le boîtier (30) est configuré pour et destiné à être fixé sur une carrosserie de véhicule ou sur au moins un composant d'une carrosserie de véhicule avec interposition d'un élément pour le découplage acoustique.

9. Châssis actif (1) selon l'une quelconque des revendications 4 à 8, **caractérisé en ce que**
a. les actionneurs (2, 5) peuvent être actionnés et/ou commandés indépendamment les uns des autres, et/ou **en ce que**
b. un dispositif de commande est présent, qui commande les actionneurs (2, 5), et/ou **en ce que**
c. un dispositif de commande est présent, qui est configuré pour recevoir des instructions de commande de capteurs et/ou d'une unité de véhicule supérieure et qui commande les actionneurs (2, 5) en tenant compte des instructions de commande, et/ou **en ce que**
d. un dispositif de commande est présent, qui commande les actionneurs (2, 5) et qui est agencé dans le boîtier (30) .

10. Châssis actif (1) selon l'une quelconque des revendications 4 à 9, **caractérisé en ce que**
a. les actionneurs (2, 5) peuvent être commandés, en particulier en fonction de la situation de conduite, de telle sorte que ceux-ci sollicitent les barres de torsion (4, 7) avec des couples de rotation de même orientation, et/ou **en ce que**
b. les actionneurs (2, 5) peuvent être commandés, en particulier en fonction de la situation de conduite, de telle sorte que ceux-ci provoquent dans la même fenêtre temporelle une rotation de l'élément de sortie selon le même angle, et/ou **en ce que**
c. les actionneurs (2, 5) peuvent être commandés, en particulier en fonction de la situation de conduite, de telle sorte que ceux-ci provoquent dans la même fenêtre temporelle une rotation de même sens des éléments de sortie selon des différents angles, et/ou **en ce que**
d. les actionneurs (2, 5) peuvent être commandés, en particulier en fonction de la situation de conduite, de telle sorte que ceux-ci sollicitent les barres de torsion (4, 7) avec des couples de rotation de sens opposé, et/ou en ce que
e. les actionneurs (2, 5) peuvent être commandés, en particulier en fonction de la situation de conduite, de telle sorte que ceux-ci tordent et ainsi serrent la barre de torsion de liaison (8), et/ou **en ce que**
f. les actionneurs (2, 5) peuvent être commandés, en particulier en fonction de la situation de conduite, de telle sorte que ceux-ci tordent et ainsi serrent la barre de torsion de liaison (8) et font tourner la barre de torsion de liaison (8) serrée.

11. Châssis actif (1) selon l'une quelconque des revendications 4 à 10, **caractérisé en ce que** le premier actionneur (2) et le deuxième actionneur (5) sont construits et/ou agencés selon une symétrie de miroir l'un par rapport à l'autre.

12. Châssis actif (1) selon l'une quelconque des revendications 2 à 11, **caractérisé par** un dispositif de mesure qui mesure la torsion de la barre de torsion de liaison (8).

13. Châssis actif (1) selon la revendication 12, **caractérisé en ce que** le dispositif de commande tient compte d'une torsion mesurée de la barre de torsion de liaison (8) lors de la commande des deux actionneurs (2, 5) .

14. Châssis actif (I) selon l'une quelconque des revendications 9 à 13, **caractérisé en ce que**
a. le dispositif de commande commande les actionneurs (2, 5) pour effectuer une stabilisation en tangage, et/ou en ce que
b. le dispositif de commande commande les actionneurs (2, 5) pour effectuer une stabilisation en vacillement.

15. Véhicule comprenant au moins un châssis actif (1) selon l'une quelconque des revendications 1 à 14.
